# EUROPEAN PATENT APPLICATION

(11) **EP 2 093 604 A1**
(43) Date of publication of application: **26.08.2009**
(21) Application number: 09150419.1
(22) Date of filing: 13.01.2009
(51) Int. Cl.: G02C 1/02

(54) **Device for fixing the lens to a frame of eyeglasses, particularly for three-part frames**

(30) Priority: 20.02.2008 IT PD20080051
(71) Applicant: Silcon Plastic S.R.L., 32012 Forno di Zoldo (BL) (IT)
(72) Inventor: Costantin, Arcangelo, 32012, FORNO DI ZOLDO BL (IT); Battistin, Pietro, 32012, FORNO DI ZOLDO, Frazione DONT BL (IT)
(74) Representative: Modiano, Micaela Nadia

(57) **Abstract**

A device (10) for fixing the lens (11) to a frame (12) of eyeglasses, particularly for three-part frames, comprising
- in the frame (12), an equipped region (13) with a tab (14), which protrudes from the frame (12), and with a first abutment surface (15) for one lens (11), which has, in a part thereof to be fixed to the equipped region (13), a through insertion hole (16) for the tab (14),
- an element (17, 117) for locking the lens (11) to the frame (12), which has a second surface (18) for abutment with the lens (11), in opposition to the first abutment surface (15), a coupling hole (19, 119) and a collar (20, 120) which are threaded internally for screwing on a free threaded end (21) of the tab (14), so as to lock the lens (11) between the locking element (17, 117) and the frame (12).

The collar (20, 120) is inserted so as to interpose itself between the tab (14) and the corresponding wall of the insertion hole (16).

## Description

The present invention relates to a device for fixing the lens to the frame of eyeglasses, particularly for three-part frames.

Various types of device for fixing lenses to frames of eyeglasses, particularly for three-part frames, are currently known.

One known type of fixing device provides a hole formed in an equipped region of the frame, for example on the bridge or end piece, and a corresponding hole provided in the lens.

A screw for fixing the lens to the frame is inserted through such holes.

In order to lock the lens to the frame, the screw is inserted in the hole of the lens, in the hole of the frame, and then tightened by means of a provided nut.

In this manner, the lens is fixed to the frame, since it is forced between the head of the screw and the frame, by the bolt tightened onto the shank of the screw.

In order to avoid the rotation of the lens, which is pivoted on the screw, a pin is provided, generally proximate to the hole in the frame, and is adapted to engage a recess or a second hole provided in the lens proximate to the screw insertion hole.

Further, usually there is a covering cap for the portion of the shank of the screw that protrudes from the bolt when such bolt is tightened thereon to fix the lens to the frame, so as to prevent the user from being scratched with the exposed part of the shank.

This type of fixing device, despite being appreciated for its constructive and assembly simplicity, has drawbacks.

One drawback of this type of fixing is that the bolt or head of the screw, made of metallic material, tightened onto the screw, also made of metallic material, in order to push the lens against the frame to block it thereat, usually subject the screw to a traction tension that tends to elongate it elastically and which, if it is excessive, can cause its yielding and failure.

Further, during use of the eyeglasses the nut tends to loosen from the screw, possibly unscrewing itself completely from it and thus requiring the user to tighten it again or replace it if lost.

The need is thus felt for a device for fixing the lens to the frame of eyeglasses, particularly for three-part frames, which allows a locking of the lens to the frame that is effective and durable over time, since it does not require restoration operations.

The aim of the present invention is to provide a device for fixing the lens that allows to meet this requirement, ensuring stable and effective locking of the lens on the frame without requiring periodic restoration operations.

Within this aim, an object of the invention is to provide a fixing device that can be adapted to lenses of different thicknesses.

Another object of the invention is to provide a fixing device that is structurally simple and easy to use and can be produced with low costs.

This aim and these and other objects, which will become better apparent hereinafter, are achieved by a device for fixing the lens to the frame of eyeglasses, particularly for three-part frames, characterized in that it comprises
- in a frame, a region equipped with a tab, which protrudes from said frame, and with a first abutment surface for a lens, said lens having, in a part thereof to be fixed to said equipped region, a through insertion hole for said tab,
- an element for locking the lens to the frame, which has a second surface for abutment with said lens, in opposition to said first abutment surface, a coupling hole and a collar which are threaded internally for screwing onto a threaded free end of said tab, so as to lock said lens between said locking element and said frame, said collar being inserted so as to interpose itself between said tab and the corresponding wall of said insertion hole.
   Further characteristics and advantages of the invention will become better apparent from the following detailed description of preferred but not exclusive embodiments of the fixing device according to the invention, illustrated by way of non-limiting example in the accompanying drawings, wherein:
   Figure 1 is a perspective view of a fixing device according to the invention;
   Figure 2 is a sectional view of a fixing device according to the invention;
   Figure 3 is a perspective view of a second embodiment of a fixing device according to the invention;
   Figure 4 is a sectional view of a fixing device according to the invention in its second embodiment.
   It is noted that anything found to be already known during the patenting process is understood not to be claimed and to be the subject of a disclaimer.
   With reference to the figures, the reference numeral 10 generally designates a device for fixing a lens 11 to a frame 12 of the eyeglasses.
   A particularity of the fixing device 10 according to the invention is that it comprises
- in the frame 12, an equipped region 13 with a tab 14, which protrudes from the frame 12, and with a first abutment surface 15 for one lens 11, which has, in a part thereof to be fixed to the equipped region 13, a through insertion hole 16 for the tab 14,
- an element 17 for locking the lens 11 to the frame 12, which has a second surface 18 for abutment with the lens 11, in opposition to the first abutment surface 15, a coupling hole 19 and a collar 20 which are threaded internally for screwing on a free threaded end 21 of the tab 14, so as to lock the lens 11 between the locking element 17 and the frame 12, the collar 20 being inserted so as to interpose itself between the tab 14 and the corresponding wall of the insertion hole 16.

Advantageously, the tab 14 and/or the locking element 17 are made of plastic material.

In this manner, the tab 14 can be shortened easily, by cutting it, in order to adapt it to the thickness of the lens 11.

The locking element 17 preferably has an equipped portion 22, which can be engaged by means for tightening the locking element 17 on the tab 14 so as to lock the lens 11 between the locking element 17 and the frame 12.

Conveniently, the equipped portion 22 has a hexagonal perimetric profile 23 for coupling to a screwing key provided with an insertion seat for the equipped portion 22, which is shaped complementarily thereto.

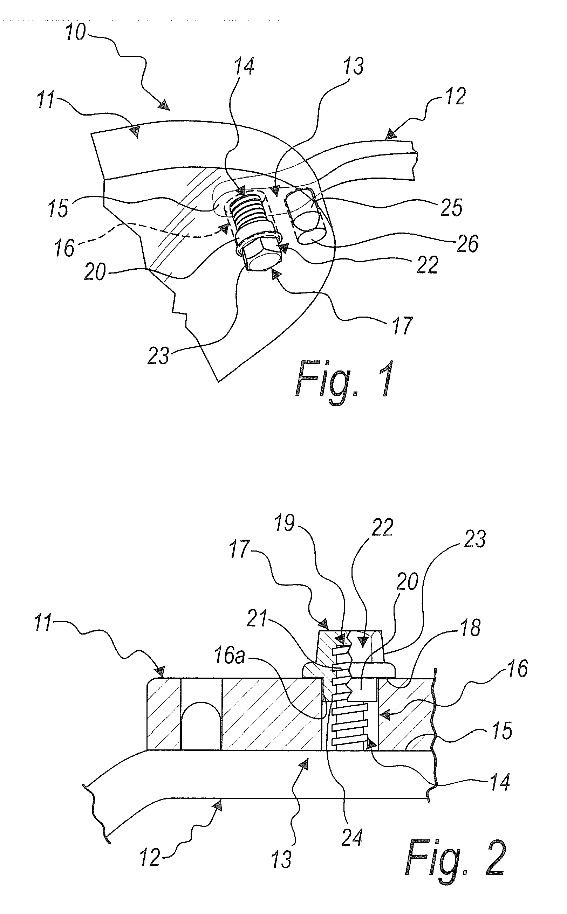

In a first embodiment shown in Figures 1 and 2, the locking element 17 advantageously has an internally threaded coupling dead hole 19, a mouth 24 of which is formed by the collar 20.

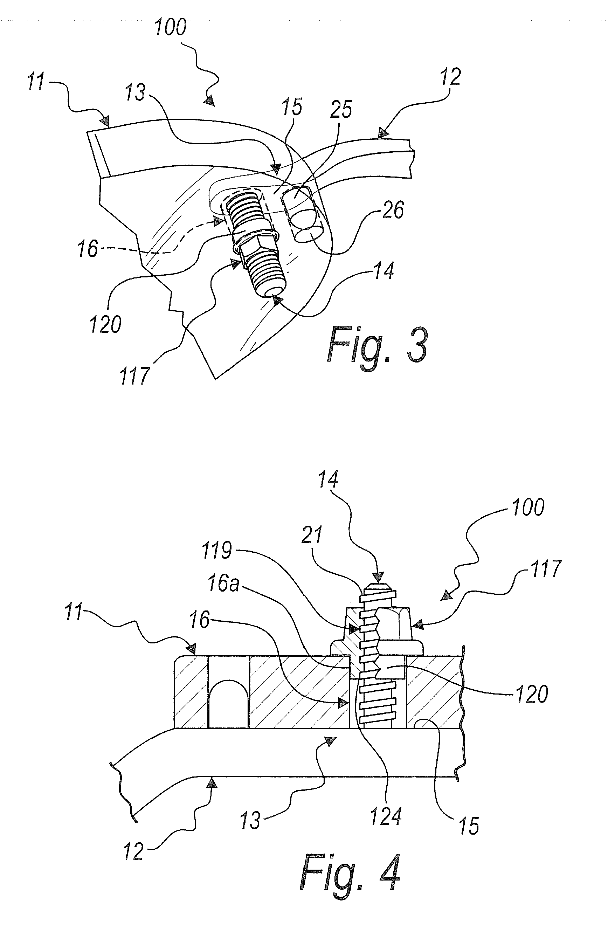

In a second embodiment of the fixing device 100 shown in Figures 3 and 4, the locking element 117 has an internally threaded coupling through hole 119, the mouth 124 of which is formed by the collar 120.

Advantageously, the equipped region 13 is provided with a pin 25 for insertion in a provided recess 26.

When the frame 12 is associated with the lens 11, with the tab 14 inserted in the insertion hole 16, the pin 25 is simultaneously inserted in the recess 26, so as to contrast the mutual rotation of the lens 11 and of the frame 12 about the axis of the tab 14.

The use of the fixing device according to the invention is as follows.

The tab 14, made of plastic material, is possibly shortened to adapt it to the thickness of the lens 11, so that when it is inserted in the insertion hole 16 it protrudes from it, with the free end 21, by a portion that is sufficient to screw the locking element 17 thereon.

Once the lens 11 is associated with the frame 12, by inserting the tab 14 in the insertion hole 16 and the pin 25 in the recess 26, the locking element 17 or 117 is screwed to the tab 14 by inserting the collar 20 or 120, which is interposed between an internal wall 16a of the insertion hole 16 and the tab 14.

In order to lock the lens 11 to the frame 12, the operator tightens the locking element 17 or 117 on the tab 14.

In this way, the collar 20 or 120, pulled by the threaded coupling with the tab 14, due to the inclination of the thread, is subjected to a perimetric widening tension.

The widening deformation that would be induced by this tension, however, is prevented by the abutment of the collar 20 or 120 against the internal wall 16a of the insertion hole 16.

This configuration therefore induces a strong friction between the collar 20 and the internal wall 16a, which contrasts the unscrewing of the locking element 17 or 117 from the tab 14.

In practice it has been found that the invention achieves the proposed aim and objects, by providing a device for fixing the lens to the frame of eyeglasses that can be adapted to lenses of different thicknesses and allows a stable and effective locking of the lens on the frame without subjecting it to such stresses as to damage it.

The invention thus conceived is susceptible of numerous modifications and variations, all of which are within the scope of the appended claims; all the details may further be replaced with other technically equivalent elements.

In practice, the materials used, so long as they are compatible with the specific use, as well as the contingent shapes and dimensions, may be any according to requirements and to the state of the art.

The disclosures in Italian Patent Application No. PD2008A000051 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device (10) for fixing the lens (11) to a frame (12) of eyeglasses, particularly for three-part frames, **characterized in that** it comprises
- in the frame (12), an equipped region (13) with a tab (14), which protrudes from said frame (12), and with a first abutment surface (15) for one lens (11), which has, in a part thereof to be fixed to said equipped region (13), a through insertion hole (16) for said tab (14),
- an element (17, 117) for locking the lens (11) to the frame (12), which has a second surface (18) for abutment with said lens (11), in opposition to said first abutment surface (15), a coupling hole (19, 119) and a collar (20, 120) which are threaded internally for screwing on a free threaded end (21) of said tab (14), so as to lock said lens (11) between said locking element (17, 117) and said frame (12), said collar (20, 120) being inserted so as to interpose itself between said tab (14) and the corresponding wall of said insertion hole (16).

2. The fixing device according to claim 1, **characterized in that** said tab (14) is made of plastic material.

3. The fixing device according to one or more of the preceding claims, **characterized in that** said locking element (17, 117) is made of plastic material.

4. The fixing device according to one or more of the preceding claims, **characterized in that** said locking element (17, 117) has an equipped portion (22) that can be engaged by means for tightening said locking element (17, 117) on said tab (14) so as to lock said lens (11) between said locking element (17, 117) and said frame (12).

5. The fixing device according to one or more of the preceding claims, **characterized in that** said coupling hole (19) is dead, its mouth (24) being formed by said collar (20).

6. The fixing device according to one or more of claims 1 to 4, **characterized in that** said coupling hole (119) is a through hole, a mouth (124) thereof being formed by said collar (120).
